# EUROPEAN PATENT SPECIFICATION

(11) **EP 3 365 503 B1**
(45) Date of publication and mention of the grant of the patent: **24.03.2021**
(21) Application number: 16857883.9
(22) Date of filing: 18.10.2016
(51) Int. Cl.: E03C 1/00, E03F 5/08, F16K 33/00, F16K 24/06

(54) **VALVE DEVICE**
VENTILVORRICHTUNG
DISPOSITIF DE SOUPAPE

(30) Priority: 21.10.2015 SE 1551364
(43) Date of publication of application: 29.08.2018
(73) Proprietor: Aktiebolaget Durgo, 169 03 Solna (SE)
(72) Inventor: HANSSON, Hans, 177 61 Järfälla (SE); WIDELL, Hans, 169 67 Solna (SE)
(74) Representative: Zacco Sweden AB
(86) International application number: PCT/SE2016/051006
(87) International publication number: WO 2017/069685

(56) References cited:
- EP-A1- 2 224 066
- FR-A1- 2 372 363
- GB-A- 405 385
- GB-A- 1 274 843
- JP-A- H08 284 227
- JP-A- 2004 019 131
- JP-A- 2004 124 356
- JP-A- 2004 124 356
- JP-A- 2012 013 097
- JP-A- 2014 074 483

## Description

### TECHNICAL FIELD

The present invention relates to a valve device for pressure equalization of the pressure within said device and the surrounding atmosphere. Specifically, the present invention relates to a valve device comprising a chamber with a check valve for said pressure equalization.

### BACKGROUND

For a piping system, such as a drainage system to function optimally it has to be correctly designed and ventilated. Pressure changes that arise in the system during use could otherwise for example empty water traps and cause bad odours and dampness. Venting has traditionally been done by a ventilation pipe through the roof.

Today, air admittance valves are a natural part of any drainage system. The valve is installed straight on to the waste pipe, thus avoiding a hole in the roof that costs time and money, and which could begin to leak and cause damp and other damage to the building. The air admittance valve lets air into the drainage system when the pressure within the chamber is lower than the pressure of the atmosphere surrounding the outside of the valve device, which equalizes the pressure and stops the water being drained out of the water traps. At normal or overpressure the air admittance valve is closed and tight, preventing foul air from leaking out into the building.

Thus, air admittance valves are well known and can be fitted to a waste pipe, or soil pipe, to which water closets, baths, wash basins, kitchen sinks, etc. can be connected via a so-called water seals. The air admittance valve is normally closed when the pressure in the pipe to which the valve is connected is the equal to or higher than the pressure in the surrounding atmosphere. The air admittance valve shall also seal the pipe channel effectively when the pressure in the pipe is higher than the pressure of the atmosphere surrounding the air admittance valve. When the pressure in the pipe is lower than the surrounding atmosphere however, the air admittance valve will open and allow ambient air to enter so as to equalize the pressure of the valve device and the pipe system connected to the valve device. This prevents liquid in the water trap being sucked away therefrom. If the liquid was removed from the water trap provided e.g. a water closet, then air and waste gases would be allowed to pass freely into the rooms and spaces in which the water-seal was installed. When fitted to a waste pipe, the air admittance valve will also prevent odours and warm and moist air from flowing out from the waste pipe, which enables installation of the sewerage system to be terminated indoors.

EP 0 867 569 discloses an air valve including a vertically movable valve plate which carries on its underside an annular sealing washer whose radially inner and outer edges are able to seal onto, upwardly facing, valve-seat rings, wherewith the washer seals the annular gap between said ring seats. The valve washer normally rests on the seats under the influence of the combined weight of the sealing washer and the guided plate carrying the washer. The valve opens in response to pressure differences between the interior of the valve device and the surrounding atmosphere.

However, there are drawbacks with prior art as the interior parts of the air admittance valve may be contaminated if a liquid accommodated within a piping system connected to the air admittance valve rises up through the connected pipe. This can occur when the pressure in the piping system is higher than the pressure in the surrounding atmosphere and/or when there is an excess of liquid within parts of the piping system and/or due to clogging within the piping system. If the air admittance valve gets contaminated there is a risk that the air admittance valve will not seal properly due to contaminating particles affecting the fitting of the sealing washer against the valve seat. This can in turn lead to a non-guaranteed sealing of the valve which can allow liquid and bad smell/odour leaking out of the air admittance valve which causes sanitary issues. The risk for this to occur is increased when the mounting of the valve is low to be fitted to a space with limited height

JP2004124356A discloses a further valve device with an additional float valve having a puck-shaped valve member which prevents liquid from rising to the air admittance valve.

### SUMMARY

The object of the present invention is to provide a valve device which decreases or eliminates the drawbacks of prior art. More specifically the object of the invention is to provide a valve device which provides pressure equalization within the device, and any piping system connected to the device, and the surrounding atmosphere whilst also providing fluid communication between said valve device and said surrounding atmosphere with low flow resistance and/or turbulence within the valve device. An even further object of the invention is to provide a valve device which prevents liquid from a piping system to which it is connected to enter the chamber of the valve device. Another object is to provide an efficient waste water piping system arranged in a building with at least one floor with at least one waste water source, which waste water piping system comprises at least one corresponding valve device.

According to one aspect of the invention the invention provides a valve device for equalization of the pressure within said device and the surrounding atmosphere. The device comprises a chamber and a pipe. The chamber is connected at an upper end of the pipe. The chamber is in selective fluid communication with the pipe. The chamber comprises a check valve arranged to allow fluid communication between the chamber and the surrounding atmosphere when the pressure difference between the surrounding atmosphere and the pressure within the chamber reaches a predetermined value. Fluid communication between the chamber and the surrounding atmosphere may be allowed when the pressure within the chamber is lower than the pressure of the atmosphere surrounding the outside of the valve device. The fluid communication between the chamber and the surrounding atmosphere is characteristically one-way communication from the surrounding atmosphere to the chamber. The valve device is characterized in that it further comprises a float valve. The float valve comprises a movable valve member and a valve seat situated within the pipe. The float valve is arranged to allow fluid communication within the valve device in an inactive state, and, when a liquid enters the pipe through a lower end of the pipe, engage the valve seat to stop fluid communication and prevent said liquid to reach the chamber, and thus also preventing said liquid to reach the surrounding atmosphere. The movable valve member comprises a substantially convex top surface and a flat bottom surface corresponding to an area defined by the perimeter of a lowest portion of the convex top surface.

This has the advantage that a single valve device provides the utility of both a check valve and a float valve, which in turns provides a device which can equalize pressure within the chamber of the valve device in regards to the atmospheric pressure surrounding the valve device. Hence, when the valve device is connected to a waste water piping system, or similar, of a building or facility, the valve device in turn equalizes the pressure in said pipe system while at the same time prevents waste water from reaching the chamber of the valve device and the atmosphere surrounding the valve device. As a waste water piping system often is subjected to pressure fluctuations within the piping system, the valve device alleviates said pressure fluctuations and stabilizes the flow of waste water within said piping system. This equalizes negative pressure in relation to the surrounding atmosphere. Thereby, it is among other things prevented that water traps accommodated in the piping system are drained due to low pressure within the pipes, as low pressure within said pipes will be equalized by the check valve.

Another advantage with the substantially convex top surface of the movable valve member of the float valve assists in guiding the fluid, preferably air, from the chamber of the valve device towards the pipe, in a way which gives rise to less turbulence than compared to a flat top surface.

An even further advantage is that the flat bottom surface corresponding to an area defined by the perimeter of a lowest portion of the convex top surface causes the flow of fluid to be guided to move in a direction substantially parallel to the interior of the pipe, which lowers the turbulence within the valve device.

An advantage with a valve device with low turbulence is that said valve device will direct a flow of fluid without causing unnecessary sound and noise and that low turbulence creates a more effective flow of fluid and hence a more efficient pressure equalization with lesser resistance within the system.

When connected to a piping system, the valve device provides equalization of the pressure between the piping system to which the valve device is connected and the surrounding atmosphere.

According to another aspect of the invention an angle between a tangential plane, parallel to the lowest portion of the convex top surface and the flat bottom surface of the movable valve member is a right angle.

This has the advantage that the flow of fluid will be perpendicular to the flat bottom surface of the movable valve member and parallel to the interior sides of the pipe, if the pipe is a straight pipe, when the flow passes the perimeter of the lowest portion of the convex top surface. This will in turn lower the turbulence of the valve device.

According to yet another aspect of the invention the angle between a tangential plane, parallel to a lowest portion of the convex top surface and the flat bottom surface of the movable valve member is a sharp angle.

This has the advantage that the flow of fluid can be directed in an angled path in relation to the flat bottom surface, dependent of the angle of the sharp angle. This can be beneficial if the pipe is a non-straight pipe as the angled flow path can be directed to be parallel with the non-straight pipe, which lowers the turbulence in such a pipe.

According to a further aspect of the invention the flat bottom surface is the area defined by the perimeter of the lowest portion of the convex top surface.

This has the advantage that movable valve member of the valve device has a shape which provides low flow resistance and turbulence in the valve device while at the same time provides a movable valve member with a compact shape which allows for making the valve device smaller and therefore possible to install in tight spaces.

According to an even further aspect of the invention the movable valve member comprises an intermediate substantially cylindrical section, the cylindrical section extending between the convex top surface and the flat bottom surface.

This has the advantage that the movable valve member will provide a float valve with low flow resistance and turbulence while at the same time provide a stable movable valve member which has a lower risk of being subjected to wobbling and/or vibrations due to the flow of fluid surrounding it. This provides for an increased flow capacity and less noise.

According to another aspect of the invention a side wall of the intermediate substantially cylindrical section has a length of at least 5% of the diameter of the cylindrical section and preferably above 10% times the diameter of the cylindrical section.

This has the advantage that a more stable movable valve member of float valve with low flow resistance and turbulence is provided. This provides for achieving an optimal flow capacity. The risk of tilting or tipping of the movable valve member or even that the movable valve member gets stuck is low. This secures that the movable valve member is sealed tight against the valve seat when a liquid enters the pipe to thereby stop fluid communication and prevent said liquid to reach the chamber.

According to another aspect of the invention a side wall of the intermediate substantially cylindrical section has a length of maximum 50% of the diameter of the cylindrical section.

A cylindrical section having a longer extension would provide limited or no improvement to the flow capacity. The movable valve member having a short extension allows for a design of a valve device having a short extension, which leads to more flexible installation requirements and a lower cost.

According to yet another aspect of the invention the substantially convex top surface has the shape of a section of a sphere.

This has the advantage that movable valve member of the valve device has a very common geometrical shape which makes it easy to shape and manufacture which in turn leads to lower manufacturing costs for the device.

According to a further aspect of the invention the convex top surface has the shape of a section of an oblate spheroid, which section is defined by the outer surface of said oblate spheroid and a plane of the oblate spheroid perpendicular to the smallest possible axis within the spheroid.

This has the advantage that the characteristics of the movable valve member will be very close to the characteristics of a section of a sphere at the perimeter of the convex top surface, while at the same time lower the total height of the movable valve member compared to a movable valve member with a sphere shaped convex top portion. This is beneficial if space is an issue and the valve device must be small enough to fit into a tight space.

According to an even further aspect of the invention the pipe comprises a flared portion, flaring out in a direction towards a lower end of the pipe.

This has the advantage that the cross sectional area of the flow of the fluid can be increased as the distance from the movable valve member in an inactive state and the interior of the pipe can be increased without affecting the ability of the float valve to seal the pipe if a liquid enters the pipe from below. A further advantage with a flared pipe portion is that the angle of a tangential plane, parallel to the lowest portion of the convex top surface, and an angle of the flaring can be adjusted in relation to each other to optimize the flow of fluid and lower the turbulence within the valve device as much as possible. An even further advantage with a flared pipe portion is that the fitting between a valve device corresponding piping systems with various sizes is made easier as the same size of the chamber can be used while the size of the pipe can be adjusted by modifying the length of the flared pipe portion.

According to another aspect of the invention the flared portion is in the shape of a truncated cone.

This has the advantage that the flared pipe portion has a shape which is common in industrial applications which makes it easy and therefore cheap to manufacture.

According to yet another aspect of the invention the valve seat is arranged within the flared out portion of the pipe.

This has the advantage that the cross sectional area of the flow path of the fluid will not be lowered due to the insertion of the valve seat. This is beneficial as a lesser restriction of the flow path of the fluid will lower the turbulence and resistance within the valve device.

According to a further aspect of the invention the device comprises a cage which is arranged to accommodate the moving valve member.

This has the advantage that movable valve member will be securely held in place within the valve device in a simple way while at the same time offer a protection for the movable valve member which is beneficial as the integrity of the geometry of the movable valve member is imperative to the sealing function of float valve.

According to an even further aspect of the invention the valve seat is arranged in an upper section of the cage.

This has the advantage that the manufacturing process of the valve device can be made easier to manage as the individual parts can be manufactured and fitted together separately which can increase the manufacturing process efficiency. This further has the advantage that maintenance of the valve device can be easier to perform as a defective float valve can be replaced without affecting the check valve and the chamber of the valve device.

According to another aspect of the invention the invention provides a waste water piping system arranged in a building with at least one floor. The waste water piping system comprises at least one waste water source connected to the waste water piping system on said at least one floor. The waste water piping system further comprises at least one valve device for equalization of the pressure within said device, and any piping system connected to said device, and the surrounding atmosphere. The device comprises: a chamber and a pipe, the chamber being connected at an upper end of the pipe, and wherein the chamber is in selectively fluid communication with the pipe. The chamber comprises a check valve arranged to allow fluid communication between the chamber and the surrounding atmosphere when the pressure difference between the surrounding atmosphere and the pressure within the chamber reaches a predetermined value. Fluid communication between the chamber and the surrounding atmosphere may be allowed when the pressure within the chamber is lower than the pressure of the atmosphere surrounding the outside of the valve device. The fluid communication between the chamber and the surrounding atmosphere is characteristically one-way communication from the surrounding atmosphere to the chamber. The valve device further comprises a float valve, wherein the float valve comprises a movable valve member and a valve seat situated within the pipe. The float valve is arranged to allow fluid communication within the valve device in an inactive state, and, when a liquid enters the pipe through a lower end of the pipe, engage the valve seat which stops fluid communication and prevents said liquid to reach the chamber and the surrounding atmosphere. The valve device is characterized in that the movable valve member comprises a substantially convex top surface and a flat bottom surface corresponding to an area defined by the perimeter of a lowest portion of the convex top surface.

This has the advantage that the single valve device provides the utility of both a check valve and a float valve, which in turns provides a device which can equalize pressure within the chamber of the valve device, and any pipe system being connected to it, in regards to the atmospheric pressure surrounding the valve device when connected to a waste water piping system of a building or facility, while at the same time prevent waste water from reaching the chamber and/or the atmosphere surrounding the valve device. As a waste water piping system often is subjected to pressure fluctuations within the piping system, the valve device alleviates said pressure fluctuations and stabilizes the flow of waste water within said piping system. This for example prevents water traps accommodated in the piping system to be drained due to low pressure within the pipes as low pressure within said pipes will be equalized by the check valve.

Another advantage with the substantially convex top surface of the movable valve member of the float valve assists in guiding the fluid, preferably air, from the chamber of the valve device towards the pipe, in a way which gives rise to less turbulence than compared to a flat top surface.

An even further advantage is that the flat bottom surface corresponding to an area defined by the perimeter of a lowest portion of the convex top surface causes the flow of fluid to be guided to move in a direction substantially parallel to the interior of the pipe, which lowers the turbulence within the valve device and prevents wobbling and/or vibrations of the movable valve member. The wobbling and/or vibrations may otherwise occur in both a horizontal and a vertical direction. The avoidance of vertical vibrations minimizes the risk that the movable valve member is lifted in a direction towards the float valve seat.

An advantage with a waste water piping system comprising such a valve device with low turbulence is that said valve device will direct a flow of fluid without causing unnecessary sound and noise and creates a more effective flow of fluid and hence a more efficient pressure equalization with lesser resistance within the system.

In one option, the at least one valve device of the piping system is located at a level below said at least one waste water generator.

One advantage with this is that the mounting of the valve device can be more flexible and the valve device can be mounted in a less visible location. Further, costs can be reduced. For example, less material in the form of shortened pipes is required. In accordance with this option with an increased risk that liquid raises from the piping system, the incorporation of the float valve in the valve device is even more beneficial.

In one option, at least one valve device of the piping system is located under said at least one floor.

One advantage with this solution is that the mounting of the valve device can be made outside the rooms of the building. Further, costs can be reduced. For example, less material in the form of shortened pipes is required. In accordance with this option with an increased risk that liquid raises from the piping system, the incorporation of the float valve in the valve device is even more beneficial.

### BRIEF DESCRIPTION OF THE DRAWINGS

The present invention will now be described in detail with reference to the figures, wherein;
- Figure 1a: shows a cross sectional view of a first example of a valve device.
- Figure 1b: shows a cross sectional view of a first example of a valve device in an open state.
- Figure 2a: shows a cross sectional view of a second example of a valve device in a closed state.
- Figure 2b: shows a cross sectional view of a second example of a valve device in an open state.
- Figure 3a-3h: shows side views of different variations of the shape of a movable valve member of a float valve.
- Figure 4a: shows a schematically side view of an example of a cage comprising an open float valve.
- Figure 4b: shows a schematically side view of the cage in Figure 4a comprising a closed float valve.
- Figure 5: shows a schematically cross sectional view of an example of a cage comprising an open float valve arranged in a pipe.
- Figure 6: shows a cross sectional view of an alternative example of a valve device.
- Figure 7: shows a schematically view of a piping system with three height levels and comprising a plurality of water inlets.
- Figure 8a: shows a schematically cross sectional view of a waste water piping system with a plurality of waste water generators and comprising a valve device.
- Figure 8b: shows a schematically cross sectional view of a waste water piping system with a plurality of waste water generators and comprising a valve device.

### DETAILED DESCRIPTION

Hereinafter different embodiments of the invention will be described associated with the enclosed drawings. Reference numbers are not to be viewed as restrictive in relation to the scope of the protection given by the patent claims, only as assistance in understanding the drawings and the various technical features of the invention.

As will be realized the invention can be modified in various ways without deviating from the scope of the claims, and aspects of the different embodiments may be combined to achieve a variety of combined technical features and embodiments. Hence, the drawings and the description should be viewed as illustrative and not restrictive.

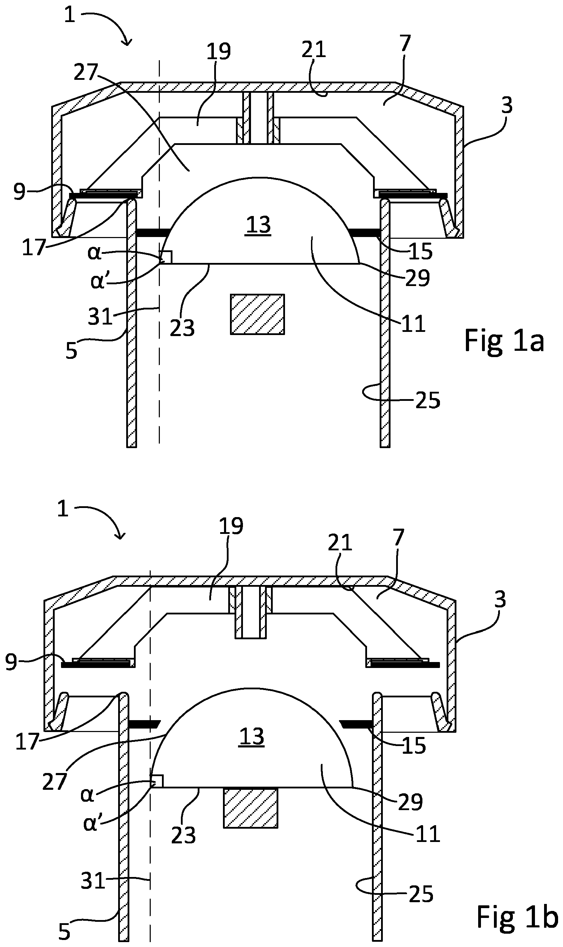

Figure 1a shows a cross sectional view of a first example of a valve device 1 in a closed state. The valve device 1 comprises a housing 3 connected to a pipe 5. The housing forms a chamber 7. The chamber 7 comprises a check valve 9 accommodated within the interior of said chamber 7. The valve device 1 further comprises a float valve 11 situated in the pipe 5. The float valve 11 comprises a movable valve member 13 and a float valve seat 15. The pipe 5 has in the illustrated example a uniformly straight cylindrical shape. The pipe 5 is adapted to be able to be connected to a piping system (not shown) containing some sort of liquid, preferably waste water. The waste water of the piping system is generated from sources separated from the valve device 1.

The valve device 1 is arranged on the piping system to let in ambient fluids such as air to achieve pressure equalization. Piping systems generally are subjected to fluctuations in pressure and volume of the fluid, in this case a liquid in the form of waste water, which it is arranged to accommodate.

In the example illustrated in figure 1a, both the check valve 9 and the float valve 11 are in a closed state. The check valve 9 is closed towards a check valve seat 17. The float valve 11 is closed towards the float valve seat 15. This prevents fluid communication between the piping system and the atmosphere surrounding the outside of the chamber 3 of the valve device 1.

The float valve 11 is arranged to close when a liquid from the piping system to which it is connected rises up in the pipe 5 of the valve device 1. This further prevents fluid communication between the chamber and the pipe 5. This has the effect that waste water is prevented to reach the chamber 7 of the valve device 1. This helps to keep the chamber 7 and the individual parts of the check valve 9 from being contaminated by the waste water from the piping system. Such contamination could potentially affect the functionality of the check valve, and in worst case lead to a non-complete seal of said valve 9 which could lead to leakage from the check valve 9 into the surrounding atmosphere.

The check valve 9 is arranged to be in the closed state when a pressure difference between the pressure in the surrounding atmosphere and the pressure within the chamber is below a predetermined value. In the example illustrated in figure 1a, the only forces acting on the check valve 9 are the differences in said pressures and the weight of the check valve 9, affected by gravity. Thus, in this example, the check valve 9 is closed when pressure within the chamber 7 is close to equal or higher than the pressure of the atmosphere surrounding the outside of the valve device 1. When closed, the check valve 9 seals an opening through which fluid communication is established between said within and outside the chamber 7. A difference in pressure between inside the chamber 7 and the surrounding atmosphere can occur, either by the pressure within the chamber 7 or any system connected thereto dropping or by the pressure of the surrounding atmosphere increasing. If such a difference in pressure reaches the pre-determined value, said check valve will open. In one example, the predetermined value is set such that the check valve opens when a force overcoming the weight of the check valve 9 is exceeded.

The check valve 9 will then open to equalize the pressure difference by allowing a flow of air to enter the chamber 7 from the surrounding atmosphere. This required force can be varied by use of springs and/or weights. The springs can for example be arranged to either lower or increasing the required force, and consequently the pre-determined value, depending on the placement of said springs in relation to the movable parts of the check valve 9. For example, a spring placed between a supporting structure 19 of the check valve and an interior top surface 21 of the chamber 7 would act against the opening of the check valve 9 and hence increase the pre-determined value required to open the check valve 9. As should be obvious, the check valve 9 prevents equalization in pressure if the pressure is higher inside the chamber 7 than of the surrounding atmosphere, as a higher pressure within the chamber 7 would only press the check valve 9 further against its valve seat 17.

Figure 1b shows a cross sectional view of said first example of a valve device 1 in an open state. The check valve 9 is arranged to allow fluid communication from the surrounding atmosphere to the chamber 7 in the open state. The check valve 9 is normally in the closed state and switches to the open state when the pressure difference between the pressure in the surrounding atmosphere and the pressure within the chamber 7 is equal to or higher than the predetermined value.

The only difference between figure 1a and 1b is that the state of the valve device 1, in that both the check valve 9 and the float valve 11 in figure 1b are open for fluid communication. This in turn means that any waste water present in the piping system to which the valve device 1 is connected is not at a high enough level within the valve device 1 as to engage a flat bottom surface 23 of the movable valve member 13 of the float valve 11. The check valve 9 being open means that fluid communication is open between the surrounding atmosphere and the inside of the chamber 7, and as the float valve 11 also is open fluid communication is hence allowed throughout the valve device 1 so that a flow of air is able to flow from the outside surrounding atmosphere, through the valve device 1 and into the connected piping system. On opening the check valve 9, pressure equalization is initiated. Such pressure equalization can be needed in a piping system due to various reasons. In the case of a waste water piping system, which system comprises at least one waste water generator, such as a toilet or a sink, pressure equalization may be needed to avoid emptying the water traps arranged in the waste water generators. If the water traps of a waste water piping system are emptied, foul odours can reach the interior of a house or building in which the waste water piping system is arranged. These types of systems are almost always equipped with said water traps to prevent the gases and odours from the piping system to rise up through the pipes and enter the rooms in which the waste water generators such as toilets or sinks are provided. When a volume of waste water is generated and for example flushed down a toilet, the flow of said waste water can cause a negative pressure change within the pipe, which in turn can cause a suction effect. The suction effect may drain the water from any water trap into the waste water piping. If the waste water trap is empty the barrier it is arranged to create is removed which leads to waste gases and odours to be able to escape the piping system and enter the room in which the waste water generator is located. The valve device 1 disclosed herein eliminates this problem as the negative pressure change within the piping system is equalized by means of the opening of the check valve 9 arranged in the valve device 1. As described above, the open check valve 9 lets fluid such as air from the surrounding atmosphere into the interior of the waste water piping system.

The float valve 11 according to embodiments disclosed in relation to figure 1a and 1b comprises a movable valve member 13 and a float valve seat 15. The valve seat 15 is situated on an interior wall surface 25 of the pipe. The movable valve member 13 further comprises a substantially convex top surface 27 and a flat bottom surface 23 corresponding to an area defined by the perimeter of a lowest portion 29 of the convex top surface 27. In the illustrated example, the convex top surface 27 has the shape of a section of a sphere. The sphere has been cut in a plane going through the centre of said sphere. This in turn means that an angle α between a tangential plane 31 parallel to the lowest portion 29 of the convex top surface 27 and the flat bottom surface 23 is a right angle α'.

The flow of air passing the movable valve member 13 is guided such that when the air passes the edge of the flat bottom surface 23, turbulence in the air flow, as for example would occur with float valves 11 comprising round movable valve members 13, is alleviated. Turbulence in the air flow can cause vibrations of the movable valve member 13. This may be the cause of unwanted sounds. This may also be the cause of a decreased air flow around the movable valve member 13. The movable valve member 13 according to the disclosure therefore provides a valve device 1 with an improved air flow and with less turbulence and accompanied noise, which can be a nuisance for people using waste water generators associated with the piping system.

It is pointed out that the illustrated shape of the substantially convex top surface 27 is just an example. The convex top surface 27 may have any shape as long as it is convex. For example, the convex top surface 27 may have the shape of a section of an oblate spheroid. Further, the angle α between the tangential plane 31, parallel to the lowest portion 29 of the convex top surface 27 and the flat bottom surface 23 of the movable valve member 13 may have a sharp angle α".

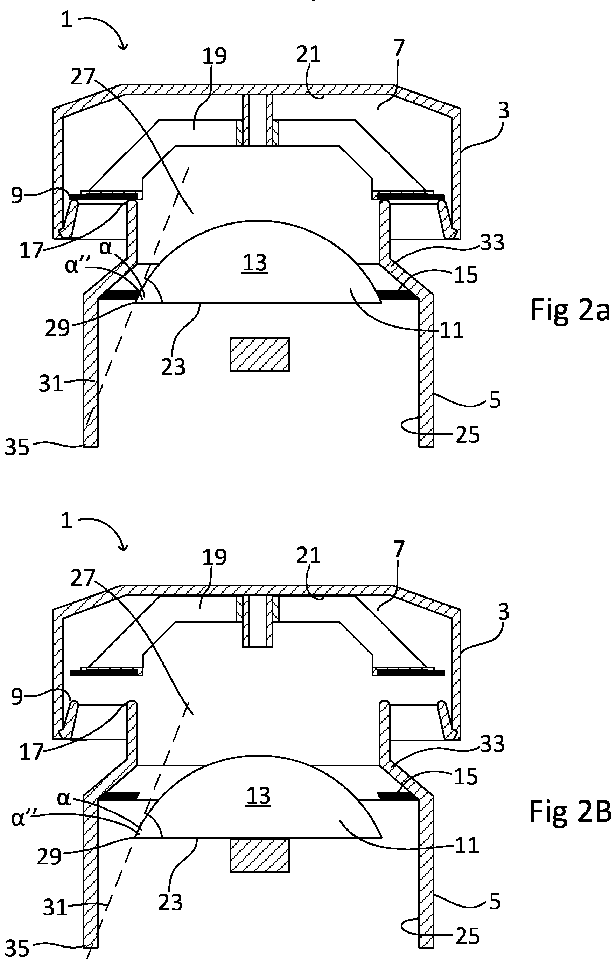

Figure 2a shows a cross sectional view of a second example of a valve device 1 in a closed state. As described in relation to Figures 1a and 1b, the valve device 1 comprises a housing 3 connected to a pipe 5. The housing 3 forms a chamber 7. As also described in relation to figs 1a and 1b, the chamber 7 comprises a check valve 9 accommodated within the interior of said chamber 7 and a float valve 11 situated in the pipe 5, wherein the float valve 11 comprises a movable valve member 13 and a float valve seat 15. The pipe 5 is adapted to be able to be connected to a piping system containing some sort of liquid, preferably waste water. The waste water of the piping system is generated from sources separated from the valve device.

The valve device 1 is arranged on the piping system to let in ambient fluids such as air to obtain pressure equalization. Piping systems generally are subjected to fluctuations in pressure and volume of the fluid, in this case a liquid in the form of waste water, which it is arranged to accommodate.

The pipe 5 comprises a flared portion 33, flaring out in a direction towards a lower end 35 of the pipe 5. In the illustrated example, the flared portion 33 is in the shape of a truncated cone. However, other flared shapes are also possible, such as a rounded flared shape or other, without deviating from the scope of the disclosure.

The convex top surface 27 of the illustrated movable valve member 13, depicted in figure 2a, has the shape of a section of a sphere. The sphere is cut by a plane above the centre of the sphere.

This in turn has the effect that an angle α between a tangential plane 31, parallel to a lowest portion 29 of the convex top surface 27 and the flat bottom surface 23 of the movable valve member 13 is a sharp angle α". Having said angle α being a sharp angle α" changes the direction in which the air flow is guided to a more outward going direction. The combination of a flared out portion 33 of the pipe 5 and the angle α between a tangential plane 31, parallel to a lowest portion 29 of the convex top surface 27 and the flat bottom surface 23 of the movable valve member 13 being a sharp angle α" provides an air flow which can be arranged to be parallel to either the perimeter of the lowest portion 29 of the convex top surface 27, an angle β of the flared out portion 33 of the pipe 5, or both, depending on the value of said angle β. Changing the value of said two angles α, β can be beneficial as a modification of the air flow of the device can be done without changing the entire design of the device 1.

However, is pointed out that the illustrated shape of the substantially convex surface 27 is just an example. The convex top surface 27 may have any shape as long as it is convex. For example, the convex top surface may have the shape of a section of an oblate spheroid. Further, the angle α between the tangential plane 31, parallel to the lowest portion 29 of the convex top surface 27 and the flat bottom surface 23 of the movable valve member 13 may have a right angle α'.

Figure 2b depicts the same valve device as figure 2a but in an open state in regards to the check valve 9 and the float valve 11. In the illustrated example, the open space between the movable valve member 13 and the interior wall surface 25 of the pipe 5 is larger than for the example depicted in 1b. This means that there is more space for air flow which in turn can help lower turbulence as the same volume of air passing by the movable valve member 13 can move slower in 2b as there the cross sectional area for passage is larger. The speed of air being lower further lowers the risk of turbulence which can cause the movable valve member to wobble or vibrate which was described with reference to figure 1a and 1b.

In Figures 2a and 2b, the valve seat 15 of the float valve 11 within the flared out portion 33 of the pipe 5. Thereby, the cross sectional area acting as a passage for the flow of air is not decreased and/or disturbed by the arrangement of the valve seat 15 which in turn leads to less turbulence and better air flow within the valve device 1.

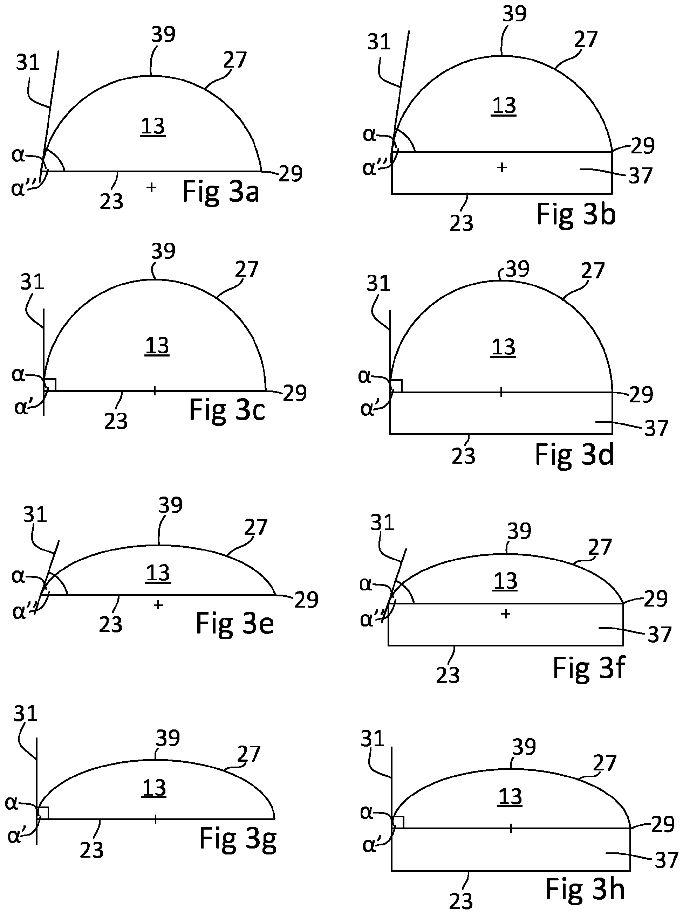

In accordance with the examples disclosed in relation to figures 1a, 1b, 2a, 2b, the substantially convex top surface 27 of the movable valve member 13 of the float valve 11 can be designed in different ways,. The flat bottom surface 23 is in these illustrated examples the area defined by the perimeter of the lowest portion 29 of the convex top surface 27. This however is not a necessity; on the contrary, the shape of the movable valve member 13 can be modified to further comprise an intermediate substantially cylindrical section 37, the cylindrical section 37 extending between the perimeter of the lowest portion 29 of the convex top surface 27 and the flat bottom surface 23. The various shapes of the movable valve member 13 possible will be described in more detail with reference to figures 3a-3h. It should be realized that the various shapes and designs of the movable valve member 13 can change the characteristics of the air flow and the overall features of the valve device 1, which various characteristics may be of equal importance depending on the type of piping system the valve device 1 is connected to. Space available for installation in said systems may also affect the demands on the valve, which can affect the choice of design for the valve device 1 and its components. For example, if a valve device 1 is to be installed in a very restricted space, a movable valve member 13 which is as flat/thin as possible might be required for the valve device 1 to fit. As a contrary example, if space is a non-issue, the valve device 1 may be designed to achieve the best possible flow with the lowest amount of turbulence as the design parameters are more lenient in this case. An intermediate cylindrical section 37 situated between the convex top surface 27 and the flat bottom surface 23 further increases the stability of the movable valve member 13 as the passage wherein the air flow is guided to a more stable or efficient air flow is increased. A more stable movable valve member 13 is also desirable as it leads to less turbulence and lesser risk that the movable valve member tilts or tips or even gets stuck. This would negatively affect the sealing function of the float valve so that it does not seal properly which may affect the flow within the valve device 1 in a negative way.

Figure 3a-3h shows side views of different variations of the shape of a movable valve member 13 of the float valve 11 according to different examples. These various examples are variations of certain preferred features of the invention, and combinations thereof. The shape of the convex top surface 27 can be any convex shape, but preferably a section of a sphere or the shape of an oblate spheroid, are used. Said shapes can thereafter be coupled to, directly or in-directly, with the flat bottom surface 23. In the case of a sphere, the flat bottom surface 23 can be seen as a plane cutting the sphere, either through the centre of the sphere, or between the centre and an upper edge 39. If the plane goes through the centre of the sphere the angle α between said plane and a tangential plane 31, parallel to the lowest portion 29 of the convex top surface 27, will be a right angle α'. If the plane is a plane which goes through the sphere above the centre, said angle α will be a sharp angle α" instead. In the case wherein the shape is that of a section of an oblate spheroid, which section is defined by the outer surface of said oblate spheroid and a plane of the oblate spheroid perpendicular to the smallest possible axis within the spheroid, the plane going through said spheroid can in a corresponding way go through its centre or above said centre. For both these shapes the angle is a sharp angle α" or a right angle α' and not an obtuse angle. An obtuse angle would mean that the movable valve member 13 would have ingoing edges which would not be beneficial due to higher turbulence around such an edge. Both above described shapes of the movable valve member 13 may also comprise an intermediate substantially cylindrical section 37. The cylindrical section 37 extends between the perimeter of the lowest portion 29 of the convex top surface 27 and the flat bottom surface 23. Such an intermediate section 37 is, as described earlier, advantageous from a perspective regarding air flow within the valve device 1.

By combining the above described variations in various ways, desired characteristics can be obtained. Figure 3a shows a sphere with the flat bottom surface 23 going through above the centre of said sphere. Further, in the illustrated example of figure 3a, a tangential plane 31 parallel to the lowest portion 29 of the convex top surface 27 and the flat bottom surface forms a sharp angle α". Figure 3b shows a shape similar to that of figure 3a, but further comprising an intermediate cylindrical section 37. Figure 3c shows a sphere with the flat bottom surface 23 going through the centre of said sphere. Further, in the illustrated example of Fig 3c, a tangential plane 31 parallel to the lowest portion 29 of the convex top surface 27 and the flat bottom surface forms a right angle α'. Figure 3d shows a shape similar to that of figure 3c, but further comprising an intermediate cylindrical section 37.

Figure 3e shows an oblate spheroid with the flat bottom surface 23 going through above the centre of said oblate spheroid. Further, in the illustrated example of figure 3e, a tangential plane 31 parallel to the lowest portion 29 of the convex top surface 27 and the flat bottom surface forms a sharp angle α". Figure 3f shows a shape similar to that of figure 3e, but further comprising an intermediate cylindrical section 37. Figure 3g shows an oblate spheroid with the flat bottom surface 23 going through the centre of said oblate spheroid. Further, in the illustrated example of figure 3g, a tangential plane 31 parallel to the lowest portion 29 of the convex top surface 27 and the flat bottom surface forms a right angle α'. Figure 3h shows a shape similar to that of figure 3g, but further comprising an intermediate cylindrical section 37.

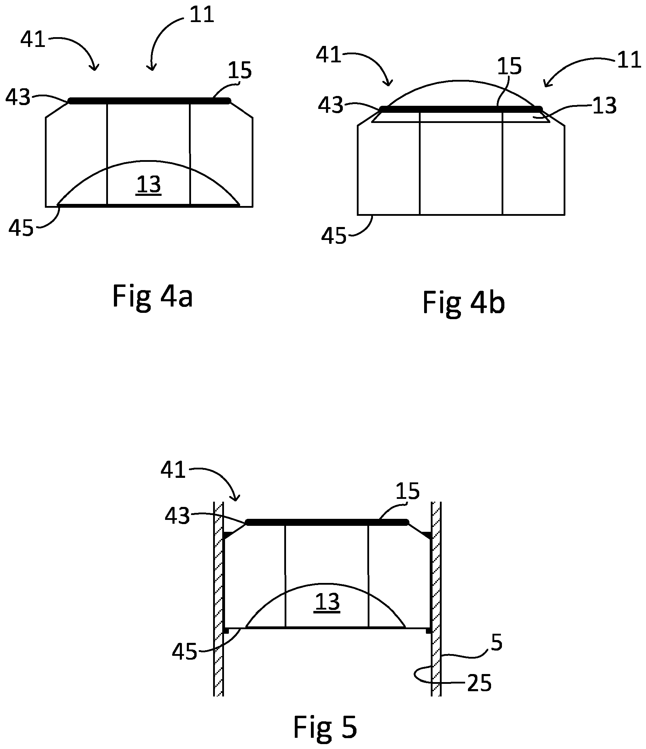

Figure 4a shows a schematically side view of an example of a cage 41 comprising a float valve 11 in an open state. In this example the float valve 11 is arranged within a cage 41, or a cage-like structure. The float valve 11 may therefore be assembled within said cage 41 outside the valve device 1. This can aid in making manufacturing of the device 1 as a whole easier. It can also make maintenance more lenient to perform as the device 1 may be adapted to remove the cage 41 without disrupting the check valve 9 or other sensitive parts. The float valve 11 according to the examples of figures 4a and 4b has the float valve seat 15 arranged in the cage 41, at an upper section 43 of the cage 41. As the fitting of any type of valve in regards to its valve seat is of the outmost importance for the function of said valve, having the valve seat arranged in a cage 41 can make an installation and/or maintenance procedure much easier as the cage 41 can be removed and worked on outside the otherwise hard to reach inside of the pipe 5 of the valve device 1.

Figure 4b shows a schematically side view of the cage 41 in figure 4a comprising a float valve 11 in a closed state. This float valve 11 and the cage 41 of figure 4b can be seen as the same example as that of figure 4a, with the only difference being that the float valve 11 is closed in figure 4b. The float valve 11 seals against the valve seat 15 arranged at the upper section 43 of the cage 41. In the example of the float valve 11 being arranged within a cage 41, the movable valve member 13 will not need any other type of support projection within the pipe 5 to not fall down into a connecting piping system, as a lower section 45 of the cage 41 can act as a stop for the movable valve member 13 when it is not subjected to any liquid from said piping system.

Figure 5 shows a schematically cross sectional view of an example of a cage 41 comprising an open float valve 11 arranged in a pipe 5. This example can be seen as the same example as in figure 4a and 4b, wherein the cage 41 has been arranged within a pipe 5, which pipe 5 is a pipe 5 of the valve device 1 according to the invention. The cage 41 is fastened to the interior wall surface 25 of the pipe 5 by means of any type of fastening means according to known technology. By utilizing a cage 41 for accommodating the float valve 11 and its valve seat 15, said valve seat 15 may be changed in height placement within the pipe 5 if so desired, compared to having a fixed valve seat 15 within a pipe 5 of a valve device 1.

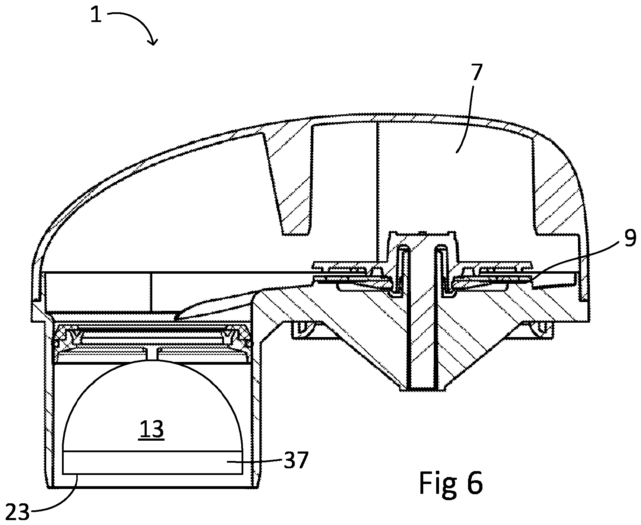

Figure 6 shows a cross sectional view of an alternative example of a valve device 1 according to the present invention. This example shows that the valve device 1 may be altered in design without deviating from the scope of the claims. The valve device 1 of figure 6 has a check valve 9 being subjected to the pressure differences between the interior of the chamber 7 and the surrounding atmosphere as well as the gravity affecting the mass of the check valve itself 9, as in previously described examples. The movable valve member 13 of this example is a sphere with the flat bottom surface 23 going through the centre of said sphere, further comprising an intermediate cylindrical section 37. As is obvious the valve device 1 according to the scope of the claims and the description may be altered in various ways to be adapted to different scenarios and environments, with figure 6 merely depicting one example of said variations.

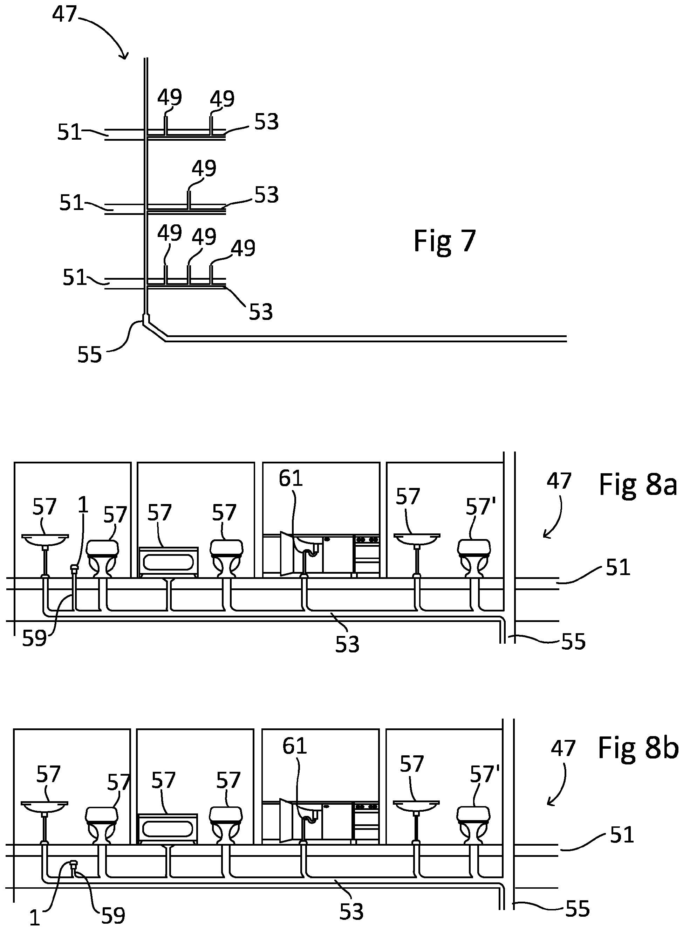

Figure 7 shows a schematically view of a piping system 47 with three height levels and comprising a plurality of water inlets 49. The piping system 47 depicted herein illustrates how a piping system 47, such as a waste water piping system 47 can be installed in different floors 51 of a building or facility. Individual inlets 49 are connected to pipe sections 53 arranged within each separate floor 51 of the building or facility, and the separate pipe sections 53 are then connected to a common waste pipeline 55. The common pipeline 55 then leads all accumulated waste water to a sewer and/or a waste management system.

Figure 8a shows a schematically cross sectional view of a waste water piping system 47 with a plurality of waste water generators 57 and comprising a valve device 1. Of course, the waste water piping system can comprise a plurality of valve devices 1. The valve device 1 in this example is connected to a pipe 59 which is arranged within a bathroom situated on a floor 51 of a building. When using one of the waste water generators 57 of this example it will affect the pressure of the entire pipe section 53 connected to the waste water generators 57. Generally each waste water generator 57 is provided with a water trap 61 which leads to the piping system 47 not being in direct contact with the air within the rooms of the building. Hence, when a waste water generator 57 is used, such as a toilet 57', the pipe section 53 will be subjected to a negative pressure change when the mass of waste water flows towards the common waste water pipeline 55. If no valve device 1 for pressure equalization was present in the piping system 47, the low pressure of the piping system 47 would create a suction effect which could drain the water from the water traps 61 to flow down into the piping system 47. This would leave the piping system 47 in direct communication with the air inside the building in this example. This could in turn lead to gases and odours from the piping system 47 to directly flow into the atmosphere within the rooms which would create an unpleasant and unhealthy environment within the building or facility. This could also lead to damages from damp. These problems are reduced or avoided by means of a valve device 1 according to the present invention being provided to the piping system 47. The pressure changes within the piping system 47 will then be equalized by means of said valve device 1 connected to the pipe sections 53 of the piping system 47.

A float valve of the valve device is arranged to close when a liquid from the piping system to which it is connected rises up in the pipe of the valve device 1. This further prevents fluid communication between a chamber of the valve device and the pipe. This has the effect that waste water is prevented to reach the chamber of the valve device. This helps to keep the chamber and the individual parts of the valve device from being contaminated by the waste water from the piping system. Such contamination could potentially affect the functionality of the valve device, and in worst case lead to a non-complete seal of said valve device, which could lead to leakage from the valve device 1 into the surrounding atmosphere.

In the illustrated example, the valve device 1 is located at a level below all the waste water generators 57 at a same floor 51 of a building. In one example, the valve device 1 is located at a level below nearby waste water generators 57 such as waste water generators 57 in the same room as the valve device 1. In an environment where the valve device 1 is at a low level in relation to the waste water generators 57 the risk is increased that a liquid from the piping system 47 to which the valve device 1 is connected rises up in the pipe of the valve device 1. In this environment with an increased risk that liquid raises from the piping system 47, the incorporation of the herein described float valve in the valve device 1 is even more beneficial.

Figure 8b shows a schematically cross sectional view of a waste water piping system 47 with a plurality of waste water generators 57 and comprising a valve device 1. The valve device 1 in this example is connected to a pipe 59 which is arranged under the floor under a bathroom situated on the floor 51 of a building. The functionally of the piping system 47 of this example is the same as the functionality of the piping system 47 described with reference to figure 8a, with the exception of the valve device 1 being arranged under the floor of the bathroom instead of directly within the interior of said bathroom. This in an alternative placement which works as well, as long as the pressure of internal structure of the floor exhibits substantially the same pressure as inside the rooms of the building.

## Claims

1. Valve device (1) for pressure equalization of the pressure within said device (1) and the surrounding atmosphere, the device (1) comprising:
a chamber (7) and a pipe (5), the chamber (7) being connected at an upper end of the pipe (5), wherein the chamber (7) is in selectively fluid communication with the pipe (5),
the chamber (7) comprises a check valve (9) arranged to allow fluid communication between the chamber (7) and the surrounding atmosphere when the pressure difference between the surrounding atmosphere and the pressure within the chamber (7) reaches a predetermined value,
the valve device (1) further comprises a float valve (11), wherein the float valve (11) comprises a movable valve member (13) and a valve seat (15) situated within the pipe (5), said float valve (11) being arranged to allow fluid communication within the valve device (1) in an inactive state, and, when a liquid enters the pipe (5) through a lower end of the pipe (5), engage the valve seat (15) which stops fluid communication and prevents said liquid to reach the chamber (7),
**characterized in that**
the movable valve member (13) comprises a substantially convex top surface (27) and a flat bottom surface (23) corresponding to an area defined by the perimeter of a lowest portion (29) of the convex top surface (27).

2. Valve device (1) according to claim 1, wherein an angle (α) between a tangential plane (31), parallel to the lowest portion (29) of the convex top surface (27) and the flat bottom surface (23) of the movable valve member (13) is a right angle (α').

3. Valve device (1) according to claim 1, wherein an angle (α) between a tangential plane (31), parallel to a lowest portion (29) of the convex top surface (27) and the flat bottom surface (23) of the movable valve member (13) is a sharp angle (α").

4. Valve device (1) according to any of the preceding claims, wherein the flat bottom surface (23) is the area defined by the perimeter of the lowest portion (29) of the convex top surface (27).

5. Valve device (1) according to any of the claims 1-3, wherein the movable valve member (13) comprises an intermediate substantially cylindrical section (37), the cylindrical section (37) extending between the perimeter of the lowest portion (29) of the convex top surface (27) and the flat bottom surface (23).

6. Valve device (1) according to claim 5, wherein a side wall of the intermediate substantially cylindrical section (37) has a length of at least 5% of the width of the cylindrical section (37).

7. Valve device (1) according to claim 6, wherein a side wall of the intermediate substantially cylindrical section (37) has a length of above 10% times the width of the cylindrical section (37).

8. Valve device (1) according to any of the claims claim 5 to 7, wherein a side wall of the intermediate substantially cylindrical section (37) has a length shorter than 50% of the width of the movable valve member (13).

9. Valve device (1) according to any of the preceding claims, wherein the convex top surface (27) has the shape of a section of a sphere.

10. Valve device (1) according to any of claims 1-8, wherein the convex top surface (27) has the shape of a section of an oblate spheroid, which section is defined by the outer surface of said oblate spheroid and a plane of the oblate spheroid perpendicular to the smallest possible axis within the spheroid.

11. Valve device (1) according to any of the preceding claims, wherein the pipe (5) comprises a flared portion (33), flaring out in a direction towards a lower end (35) of the pipe (5).

12. Valve device (1) according to claim 11, wherein the flared portion (33) is in the shape of a truncated cone.

13. Valve device (1) according to any of claims 11-12, wherein the valve seat (15) is arranged within the flared portion (33) of the pipe (5).

14. Valve device (1) according to any of the preceding claims, wherein the device (1) comprises a cage (41) which is arranged to accommodate the movable valve member (13).

15. Valve device (1) according to claim 14, wherein the valve seat (15) is arranged in an upper section (43) of the cage (41).

16. Piping system (47) arranged in a building with at least one floor (51),
comprising at least one waste water generator (57) connected to the waste water piping system (47) on said at least one floor (51),
**characterized in that**
it comprises at least one valve device (1) according to any of claims 1-15.

17. Piping system according to claim 16, wherein the piping system is a waste water piping system.

18. Piping system (47) according to claim 16 or 17, wherein said at least one valve device is located at a level below said at least one waste water generator (57).

19. Piping system (47) according to any of the claims 16 - 18, wherein said at least one valve device is located under said at least one floor (51).

## Patentansprüche

1. Ventileinrichtung (1) zum Druckausgleich des Drucks innerhalb der Einrichtung (1) und der umgebenden Atmosphäre, wobei die Einrichtung (1) umfasst:
eine Kammer (7) und ein Rohr (5), wobei die Kammer (7) an einem oberen Ende des Rohres (5) angeschlossen ist, wobei die Kammer (7) mit dem Rohr (5) selektiv in Fluidverbindung steht,
wobei die Kammer (7) ein Rückschlagventil (9) umfasst, das angeordnet ist, um eine Fluidverbindung zwischen der Kammer (7) und der umgebenden Atmosphäre zu ermöglichen, wenn die Druckdifferenz zwischen der umgebenden Atmosphäre und dem Druck innerhalb der Kammer (7) einen vorbestimmten Wert erreicht,
wobei die Ventileinrichtung (1) ferner ein Schwimmerventil (11) umfasst, wobei das Schwimmerventil (11) ein bewegliches Ventilelement (13) und einen innerhalb des Rohres (5) sitzenden Ventilsitz (15) umfasst, wobei das Schwimmerventil (11) angeordnet ist, um eine Fluidverbindung innerhalb der Ventileinrichtung (1) in einem inaktiven Zustand zu ermöglichen, und, wenn eine Flüssigkeit durch ein unteres Ende des Rohrs (5) in das Rohr (5) eintritt, den Ventilsitz (15) in Eingriff zu bringen, der die Fluidverbindung stoppt und verhindert, dass die Flüssigkeit die Kammer (7) erreicht,
**dadurch gekennzeichnet, dass**
das bewegliche Ventilelement (13) eine im Wesentlichen konvexe obere Fläche (27) und eine flache untere Fläche (23) umfasst, die einem durch den Umfang eines untersten Abschnitts (29) der konvexen oberen Fläche (27) definierten Bereich entspricht.

2. Ventileinrichtung (1) nach Anspruch 1, wobei ein Winkel (a) zwischen einer Tangentenebene (31), parallel zu dem untersten Abschnitt (29) der konvexen oberen Fläche (27) und der flachen unteren Fläche (23) des beweglichen Ventilelements (13) ein rechter Winkel (a') ist.

3. Ventileinrichtung (1) nach Anspruch 1, wobei ein Winkel (α) zwischen einer Tangentenebene (31), parallel zu einem untersten Abschnitt (29) der konvexen oberen Fläche (27) und der flachen unteren Fläche (23) des beweglichen Ventilelements (13) ein spitzer Winkel (a") ist.

4. Ventileinrichtung (1) nach einem der vorhergehenden Ansprüche, wobei die flache untere Fläche (23) der Bereich ist, der durch den Umfang des untersten Abschnitts (29) der konvexen oberen Fläche (27) definiert ist.

5. Ventileinrichtung (1) nach einem der Ansprüche 1 bis 3, wobei das bewegliche Ventilelement (13) einen im Wesentlichen zylindrischen Zwischenabschnitt (37) umfasst, wobei der zylindrische Abschnitt (37) sich zwischen dem Umfang des untersten Abschnitts (29) der konvexen oberen Fläche (27) und der flachen unteren Fläche (23) erstreckt.

6. Ventileinrichtung (1) nach Anspruch 5, wobei eine Seitenwand des im wesentlichen zylindrischen Zwischenabschnitts (37) eine Länge von mindestens 5% der Breite des zylindrischen Abschnitts (37) aufweist.

7. Ventileinrichtung (1) nach Anspruch 6, wobei eine Seitenwand des im wesentlichen zylindrischen Zwischenabschnitts (37) eine Länge von über 10% mal der Breite des zylindrischen Abschnitts (37) aufweist.

8. Ventileinrichtung (1) nach einem der Ansprüche 5 bis 7, wobei eine Seitenwand des im wesentlichen zylindrischen Zwischenabschnitts (37) eine Länge kürzer als 50% der Breite des beweglichen Ventilelements (13) aufweist.

9. Ventileinrichtung (1) nach einem der vorhergehenden Ansprüche, wobei die konvexe obere Fläche (27) die Form eines Kugelabschnitts aufweist.

10. Ventileinrichtung (1) nach einem der Ansprüche 1 bis 8, wobei die konvexe obere Fläche (27) die Form eines Abschnitts eines abgeflachten Sphäroids aufweist, welcher Abschnitt durch die Außenfläche des abgeflachten Sphäroids und eine Ebene des abgeflachten Sphäroids senkrecht zur kleinstmöglichen Achse innerhalb des Sphäroids definiert ist.

11. Ventileinrichtung (1) nach einem der vorgehenden Ansprüche, wobei das Rohr (5) einen aufgeweiteten Abschnitt (33) umfasst, der in Richtung auf ein unteres Ende (35) des Rohrs (5) aufgeweitet ist.

12. Ventileinrichtung (1) nach Anspruch 11, wobei der aufgeweitete Abschnitt (33) kegelstumpfförmig ausgebildet ist.

13. Ventileinrichtung (1) nach einem der Ansprüche 11 bis 12, wobei der Ventilsitz (15) innerhalb des aufgeweiteten Abschnitts (33) des Rohrs (5) angeordnet ist.

14. Ventileinrichtung (1) nach einem der vorhergehenden Ansprüche, wobei die Einrichtung (1) einen Käfig (41) umfasst, der zur Aufnahme des beweglichen Ventilelements (13) angeordnet ist.

15. Ventileinrichtung (1) nach Anspruch 14, wobei der Ventilsitz (15) in einem oberen Abschnitt (43) des Käfigs (41) angeordnet ist.

16. Rohrleitungssystem (47), das in einem Gebäude mit mindestens einem Boden (51) angeordnet ist,
umfassend mindestens einen Abwassererzeuger (57), der mit dem Abwasserrohrleitungssystem (47) auf dem mindestens einen Boden (51) verbunden ist,
**dadurch gekennzeichnet, dass**
es mindestens eine Ventileinrichtung (1) nach einem der Ansprüche 1 bis 15 umfasst.

17. Rohrleitungssystem nach Anspruch 16, wobei das Rohrleitungssystem ein Abwasserrohrleitungssystem ist.

18. Rohrleitungssystem (47) nach Anspruch 16 oder 17, wobei die mindestens eine Ventileinrichtung sich auf einem Niveau unter dem mindestens einen Abwassergenerator (57) befindet.

19. Rohrleitungssystem (47) nach einem der Ansprüche 16 bis 18, wobei die mindestens eine Ventileinrichtung sich unter dem mindestens einen Boden (51) befindet.

## Revendications

1. Dispositif de soupape (1) pour l'égalisation de pression de la pression à l'intérieur dudit dispositif (1) et de l'atmosphère environnante, le dispositif (1) comprenant :
une chambre (7) et un tuyau (5), la chambre (7) étant raccordée à un extrémité supérieure du tuyau (5), la chambre (7) étant en communication fluidique sélective avec le tuyau (5),
la chambre (7) comprenant un clapet anti-retour (9) agencé pour permettre la communication fluidique entre la chambre (7) et l'atmosphère environnante lorsque la différence de pression entre l'atmosphère environnante et la pression à l'intérieur de la chambre (7) atteint une valeur prédéterminée,
le dispositif de soupape (1) comprenant en outre une soupape à flotteur (11), la soupape à flotteur (11) comprenant un élément de soupape mobile (13) et un siège de soupape (15) situé à l'intérieur du tuyau (5), ladite soupape à flotteur (11) étant agencée pour permettre la communication fluidique à l'intérieur du dispositif de soupape (1) dans un état inactif, et, lorsqu'un liquide pénètre dans le tuyau (5) par une extrémité inférieure du tuyau (5), engageant le siège de soupape (15) ce qui arrête la communication fluidique et empêche ledit liquide d'atteindre la chambre (7), **caractérisé en ce que**
l'élément de soupape mobile (13) comprend une surface supérieure essentiellement convexe (27) et une surface inférieure plate (23) correspondant à une zone définie par le périmètre d'une partie la plus basse (29) de la surface supérieure convexe (27).

2. Dispositif de soupape (1) selon la revendication 1, dans lequel un angle (a) entre un plan tangentiel (31), parallèle à la partie la plus basse (29) de la surface supérieure convexe (27) et la surface inférieure plate (23) de l'élément de soupape mobile (13) est un angle droit (a').

3. Dispositif de soupape (1) selon la revendication 1, dans lequel un angle (a) entre un plan tangentiel (31), parallèle à une partie la plus basse (29) de la surface supérieure convexe (27) et la surface inférieure plate (23) du l'élément de soupape mobile (13) est un angle aigu (α").

4. Dispositif de soupape (1) selon l'une quelconque des revendications précédentes, dans lequel la surface inférieure plate (23) est la zone définie par le périmètre de la partie la plus basse (29) de la surface supérieure convexe (27).

5. Dispositif de soupape (1) selon l'une quelconque des revendications 1 à 3, dans lequel l'élément de soupape mobile (13) comprend une section intermédiaire essentiellement cylindrique (37), la section cylindrique (37) s'étendant entre le périmètre de la partie la plus basse (29) de la surface supérieure convexe (27) et de la surface inférieure plate (23).

6. Dispositif de soupape (1) selon la revendication 5, dans lequel une paroi latérale de la section intermédiaire essentiellement cylindrique (37) présente une longueur d'au moins 5% de la largeur de la section cylindrique (37).

7. Dispositif de soupape (1) selon la revendication 6, dans lequel une paroi latérale de la section intermédiaire essentiellement cylindrique (37) présente une longueur supérieure à 10% fois la largeur de la section cylindrique (37).

8. Dispositif de soupape (1) selon l'une quelconque des revendications 5 à 7, dans lequel une paroi latérale de la section intermédiaire essentiellement cylindrique (37) présente une longueur inférieure à 50% de la largeur de l'élément de soupape mobile (13).

9. Dispositif de soupape (1) selon l'une quelconque des revendications précédentes, dans lequel la surface supérieure convexe (27) a la forme d'une section de sphère.

10. Dispositif de soupape (1) selon l'une quelconque des revendications 1 à 8, dans lequel la surface supérieure convexe (27) a la forme d'une section d'un sphéroïde aplati, ladite section étant définie par la surface extérieure dudit sphéroïde aplati et un plan du sphéroïde aplati perpendiculaire à l'axe le plus petit possible à l'intérieur du sphéroïde.

11. Dispositif de soupape (1) selon l'une quelconque des revendications précédentes, dans lequel le tuyau (5) comprend une partie évasée (33), s'évasant dans une direction vers une extrémité inférieure (35) du tuyau (5).

12. Dispositif de soupape (1) selon la revendication 11, dans lequel la partie évasée (33) a la forme d'un tronc de cône.

13. Dispositif de soupape (1) selon l'une quelconque des revendications 11 à 12, dans lequel le siège de soupape (15) est agencé à l'intérieur de la partie évasée (33) du tuyau (5).

14. Dispositif de soupape (1) selon l'une quelconque des revendications précédentes, dans lequel le dispositif (1) comprend une cage (41) qui est agencée pour recevoir l'élément de soupape mobile (13).

15. Dispositif de soupape (1) selon la revendication 14, dans lequel le siège de soupape (15) est disposé dans une section supérieure (43) de la cage (41).

16. Système de tuyauterie (47) disposé dans un bâtiment avec au moins un plancher (51),
comprenant au moins un générateur d'eaux usées (57) raccordé au système de tuyauterie d'eaux usées (47) sur ledit au moins un plancher (51),
**caractérisé en ce que**
qu'il comprend au moins un dispositif de soupape (1) selon l'une quelconque des revendications 1 à 15.

17. Système de tuyauterie selon la revendication 16, dans lequel le système de tuyauterie est un système de tuyauterie d'eaux usées.

18. Système de tuyauterie (47) selon la revendication 16 ou 17, dans lequel ledit au moins un dispositif de soupape est situé à un niveau en dessous dudit au moins un générateur d'eaux usées (57).

19. Système de tuyauterie (47) selon l'une quelconque des revendications 16 à 18, dans lequel ledit au moins un dispositif de soupape est situé au-dessous dudit au moins un plancher (51).
